# EUROPEAN PATENT APPLICATION

(11) **EP 1 772 218 A1**
(43) Date of publication of application: **11.04.2007**
(21) Application number: 05767209.9
(22) Date of filing: 26.07.2005
(51) Int. Cl.: B23B 27/14

(54) **CUTTING TOOL**

(30) Priority: 29.07.2004 JP 2004221190
(71) Applicant: Kyocera Corporation, Kyoto-shi Kyoto 612-8501 (JP)
(72) Inventor: FUKANO, Tsuyoshi Kyocera Corporation, Satsumasendai-shi Kagoshima 8950211 (JP)
(74) Representative: HOFFMANN EITLE
(86) International application number: PCT/JP2005/013637
(87) International publication number: WO 2006/011472

(57) **Abstract**

A cutting tool with a hard coating layer coating a surface of a substrate formed of a hard sintered body, the hard coating layer being harder than the substrate. A polishing is performed on a cutting edge part ranging from a rake face side on a surface of the hard coating layer to a flank face side with a crossing ridge interposed therebetween. The polishing is performed so that a crack is present in a polished surface, and a depth of an adjacent region of the crack increases gradually with decreasing distance to the crack. This enables to provide the cutting tool having an excellent wear resistance and having an improvement in the chipping resistance of the cutting edge.

## Description

### TECHNICAL FIELD

The present invention relates to a cutting tool whose surface is coated with a hard coating layer.

### BACKGROUND ART

In the field of metal cutting process, the severity of cutting conditions is increased year after year. As a cutting tool used therefor, there is used generally a cutting tool in which the surface of a hard sintered substrate, such as cemented carbide, cermet, or the like, is coated with a hard coating layer. It is well known in this cutting tool that increasing the thickness of the hard coating layer improves its wear resistance but lowers the toughness of a cutting edge thereof.

As a method of solving this problem, there has been proposed a method in which the hard coating layer of the cutting edge is partially thinned or removed by honing, as in patent literature 1. On the other hand, patent literature 2 describes that a local damage on the hard coating layer in the cutting edge can be avoided by honing the surface roughness of the hard coating layer as smooth as 0.2 µm or less in Rmax. Patent literature 1: Japanese Unexamined Patent Publication No. 2-48103
Patent literature 2: Japanese Unexamined Patent Publication No. 1-16302

### DISCLOSURE OF THE INVENTION

### Problems to be Solved by the Invention

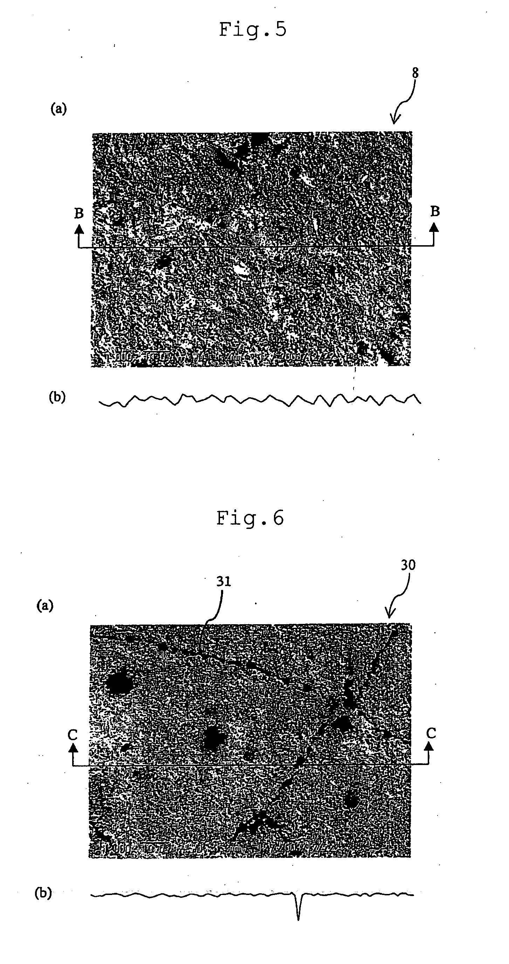

Fig. 6(a) is a scanning electron microscope (SEM) photograph showing an example of the surface of a honing part in a conventional cutting tool; and Fig. 6(b) is a diagram illustrating the height of the surface of the honing part taken along the line C-C in Fig. 6(a). As shown in the figures, a crack 31 is present in the surface of a honing part 30. Thus, the actual hard coating layer includes the crack due to a thermal expansion difference between a substrate and another hard coating layer, or the like. Accordingly, the crack may remain even in a throw-away tip obtained by honing the hard coating layer in the above-mentioned cutting edge so as to be merely thinned and smoothed.

Recently, along with the requirement for higher efficiency of cutting process, cutting conditions become severer. Especially, under severe cutting conditions such as high-speed cutting and heavy interrupted cutting employed as roughing, a high stress and a strong shock are concentrated at the crack region of the hard coating layer. As the result, the hard coating layer is peeled off, and the occurrence of chipping developed at the cutting edge cannot be suppressed, causing the problem that the hard coating layer may fracture early.

There is also the problem that a complete removal of the hard coating layer from the cutting edge by honing, or an extremely smooth honing to completely removed cracks from the surface of the hard coating layer, can lead to a great deal of adhesion of a work material. That is, in either case, the tool life tends to be shortened, and the tool life can not become stable.

Accordingly, it is an object of the present invention to provide a cutting tool with a hard coating layer having an excellent wear resistance and capable of improving the chipping resistance of a cutting edge.

### Means for Solving the Problems

To this end, the present invention is directed to a cutting tool with a hard coating layer coating a surface of a substrate formed of a hard sintered body, the hard coating layer being harder than the substrate, wherein a polishing is performed on a cutting edge part ranging from a rake face side on a surface of the hard coating layer to a flank face side with a crossing ridge interposed therebetween, so that a crack is present in a polished surface, and a depth of an adjacent region of the crack increases gradually with decreasing distance to the crack.

Consequently, even in severe cutting conditions under which a large shock is exerted as in the case with high-speed cutting and heavy interrupted cutting employed as roughing, there is no fear that stresses would be concentrated at the crack existing in a cutting edge surface part of the hard coating layer, and a local large shock would be exerted thereon. This enables to increase fracture resistance and provide the effect of suppressing the adhesion of a work material. Hence, the chipping occurred at the cutting edge can be suppressed with an excellent wear resistance maintained. This results in a long life cutting tool.

Preferably, the crack has a depth of 2 µm or less in the surface subjected to the polishing, in the interest of effective dispersion of the stress concentration exerted on the crack.
More preferably, the crack is present intermittently in the surface subjected to the polishing, in the interest of more effective dispersion of the stress concentration exerted on the crack.

Preferably, the surface subjected to the polishing has an arithmetic mean roughness (Ra) of 0.05 to 0.45 µm, in the interest of the suppression of chipping and the prevention of adhesion of a work material.

Preferably, a ratio (L_{A}/L_{B}) is 0.8 to 3, where L_{A} is a distance from the flank to a polishing terminal position P_{A} in the cutting edge part on the rake face side when viewed from the rake face, and L_{B} is a distance from the rake face to a polishing terminal position P_{B} in the cutting edge part on the flank face side when viewed from the flank, in the interest of the compatibility between the improvement of fracture resistance by virtue of the improvement of shock resistance, and the maintenance of excellent wear resistance.

Preferably, the hard coating layer is formed by CVD method, in the interest of excellent adhesion strength.
Preferably, an Al₂O₃ layer is included as the hard coating layer, and the Al₂O₃ layer is exposed to the surface subjected to the polishing, in the interest of the improved roughness of the finished surface of a work material by virtue of improvements in adhesion resistance, oxidation resistance, and plastic deformation resistance.
Preferably, the Al₂O₃ layer has a crystal structure of α (alpha) type Al₂O₃, in the interest of the enhancement of the stability of the Al₂O₃ layer in cutting, and the maintenance of stable cutting performance.
Preferably, the hard coating layer has a total layer thickness of 15 µm or less, because the tool life can be lengthened with a good balance between fracture resistance and wear resistance, without causing any peeling of the hard coating layer, or the like.
Preferably, the surface subjected to the polishing contains a surface of a horning part, and the polishing is performed so that a depth of an adjacent region of a crack existing in the surface of the honing part increases gradually with decreasing distance to the crack, because the chipping occurred at the cutting edge can be surely suppressed with a excellent wear resistance maintained.
A method of manufacturing a work piece of the present invention is directed to one performing cutting by applying a cutting edge formed at a crossing ridge between the rake face and the flank in the cutting tool of the present invention, to a work piece. Thereby, it becomes possible to obtain a work piece having stable and good surface finish.

### Effect of the Invention

In accordance with the present invention, even in severe cutting conditions under which a large impactₒ is exerted as in the case with high-speed cutting and heavy interrupted cutting employed as roughing, there is no fear that a high stress would be concentrated at the crack existing in the cutting edge surface part of the hard coating layer, and a local large impact would be exerted thereon, enabling to increase fracture resistance. By the presence of the effect of suppressing the adhesion of a work material, the chipping occurred at the cutting edge can be suppressed with an excellent wear resistance maintained. This results in a long life cutting tool. In addition, the cutting process with this cutting tool can obtain a work piece having stable and good surface finish.

### BRIEF DESCRIPTION OF THE DRAWINGS

Fig. 1 is a schematic explanatory drawing illustrating an example of a throw-away tip as a preferred embodiment of a cutting tool according to the present invention;
Fig. 2(a) is a scanning electron microscope (SEM) photograph showing the surface of a honing part of a hard coating layer in the throw-away tip of Fig. 1; and Fig. 2(b) is a diagram illustrating the height of the surface of the honing part taken along the line A-A in Fig. 2(a);
Figs. 3(a) is a schematic explanatory drawing for explaining a R honing in the step of polishing the substrate of the cutting tool in the present invention; and Fig. 3(b) is a schematic explanatory drawing for explaining a chamfer honing in the polishing step;
Fig. 4 is a schematic explanatory drawing for explaining the step of polishing a hard coating layer of the cutting tool in the present invention;
Fig. 5(a) and 5(b) show the surface state of a honing part in a cutting tool of Sample No. 7 in Examples. Specifically, Fig. 5(a) is a scanning electron microscope (SEM) photograph showing an example of the surface of the honing part of a hard coating layer; and Fig. 5(b) is a diagram illustrating the height of the surface of the honing part taken along the line B-B in Fig. 5(a); and
Fig. 6(a) and 6(b) show the surface state of a honing part in a conventional cutting tool. Specifically, Fig. 6(a) is a scanning electron microscope (SEM) photograph showing an example of the surface of the honing part of a hard coating layer; and Fig. 6(b) is a diagram illustrating the height of the surface of the honing part taken along the line C-C in Fig. 6(a).

### DESCRIPTION OF REFERENCE NUMERALS

1: throw-away tip (tip)
2: substrate
3: rake face
4: flank face
5: cutting edge
6: hard coating layer
8: honing part
9: crack
10: polishing traces
12: rake face side cutting edge part
13: flank face side cutting edge part
15: rake face mid-portion
16: flank mid-portion
18: substrate honing part
19: termination of hard coating layer honing part
20: termination of substrate honing part

### BEST MODE FOR CARRYING OUT THE INVENTION

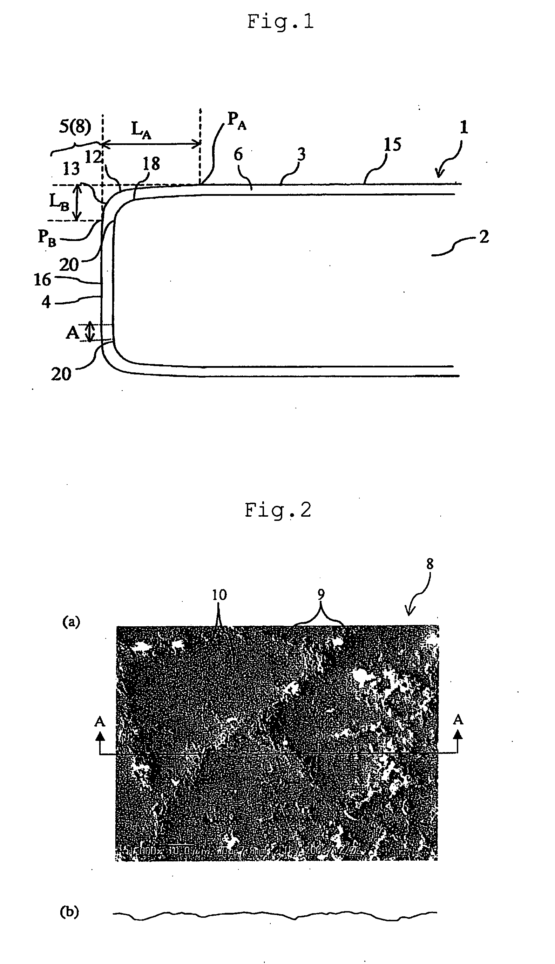

A throw-away tip (hereinafter referred to simply as "tip") as an example of cutting tools of the present invention will be described in detail with reference to the accompanying drawings. Fig. 1 is a schematic explanatory drawing of the throw-away tip as a preferred embodiment of a cutting tool according to the present invention. Fig. 2(a) is a scanning electron microscope (SEM) photograph showing the surface of a honing part of a hard coating layer in the throw-away tip; and Fig. 2(b) is a diagram illustrating the height of the surface of the honing part taken along the line A-A in Fig. 2(a).

As shown in Fig. 1, a tip 1 has a cutting edge 5 formed at a crossing ridge portion between a main surface constituting a rake face 3 of a substantially flat substrate 2, and a side surface constituting a flank face 4, and has a hard coating layer 6 coating the surface of the substrate 2. Further, a polished honing part 8 (a polished surface) is spread over a region of the cutting edge 5 extending from the rake face 3 side to the flank face 4 side with the crossing ridge interposed therebetween.

In the present invention, the term "polished surface" means the surfaces of the honing part 8 and the rake face 3 after being subjected to a polishing process, and the honing part 8 indicates a chamfering part of a corner (the cutting edge 5). In the present invention, the adjacent region of a crack 9 existing in the surface of the polished honing part 8 is polished to a predetermined shape.

Specifically, as shown in Figs. 2(a) and 2(b), it is a significant feature that the crack 9 is present in the surface of the honing part 8, and the adjacent region of the crack 9 is polished so that its depth increases gradually with decreasing distance to the crack 9, namely so as to smoothly sink. With this structure, even in severe cutting conditions under which a large impact is exerted on the cutting edge 5 as in the case with high-speed cutting and heavy interrupted cutting employed as roughing, there is no fear that stresses would be concentrated at the crack 9 existing in the surface part of the cutting edge 5 of the hard coating layer 6, and a local large impact would be exerted thereon. This enables to increase fracture resistance. In addition, by the presence of the effect of suppressing the adhesion of a work material, the chipping to be developed at the cutting edge 5 can be suppressed with an excellent wear resistance maintained. This results in the tip 1 of long life.

In other words, in the conventional cutting tool, in which the polished surface is uniformly polished as shown in Figs. 6(a) and 6(b), impacts may be concentrated at a crack portion existing in the cutting edge surface part of the hard coating layer, and hence a chipping and a fracture are liable to occur.

The total layer thickness of the hard coating layer 6 is 15 µm or less, preferably 10 to 15 µm. This avoids the occurrence of peeling or the like of the hard coating layer 6, and achieves an excellent balance between fracture resistance and wear resistance, thus enabling to lengthen efficiently the tool life.

As shown in Fig. 2(a), polishing traces 10 are present on the surface of the honing part 8 of the hard coating layer 6. The presence of the polishing traces 10 is however preferable because it is capable of releasing the residual stress developed in the hard coating layer 6, and preventing the hard coating layer 6 from peeling off from the substrate 2, thereby improving facture resistance. The polishing traces 10 are in the shape of column, and can be developed by polishing while rubbing with abrasive the surface of the hard coating layer 6, as in the case with a lapping process or a brushing process. More preferably, the polishing traces 10 extend in a random direction in the interest of stress relaxation.

Preferably, the crack 9 has a depth of 2 µm or less in the surface of the honing part 8, in the interest of effective dispersion of the stress concentration exerted on the crack 9. The depth of the crack 9 can be measured, for example, a non-contact type laser microscope.
More preferably, the crack 9 is present intermittently in the surface of the honing part 8, in the interest of more effective dispersion of the stress concentration exerted on the crack 9.

Preferably, the polished surface containing the surface of the honing part 8 has an arithmetic mean roughness (Ra) of 0.05 to 0.45 µm, in the interest of the suppression of chipping and the prevention of adhesion of a work material.
The surface roughness (arithmetic mean roughness (Ra)) in the present invention can be measured by a non-contact type surface roughness meter according to JIS B0601'01. Alternatively, when it is difficult to measure in this manner, a non-contact type laser microscope or an atomic force microscope may be used to determine by estimating while scanning an irregular shape on the uppermost surface 5 of the hard coating layer 3. When measuring on the non-contact type laser microscope, the measurement is made while moving the tip so as to be perpendicular to the laser microscope. In the case where the cutting edge shape itself has a swell, the surface roughness is calculated after the amount of the swell is subtracted for linear approximation. When the surface roughness (Ra) is measured by a stylus type surface roughness meter, the measurement is made under the conditions of 0.25 mm in cut off value; 0.8 mm in reference length; and 0.1 mm/sec in scanning speed.

A ratio (L_{A}/L_{B}) is 0.8 to 3, preferably 1 to 2, more preferably 1.1 to 1.5, where L_{A} is a distance from the flank face 4 to a polishing terminal position P_{A} in a cutting edge part 12 on the rake face 3 side when viewed from the rake face 3, and L_{B} is a distance from the rake face 3 to a polishing terminal position P_{B} in a cutting edge part 13 on the flank face 4 side when viewed from the flank face 4, in the interest of the compatibility between the improvement of fracture resistance by virtue of the improvement of impact resistance, and the maintenance of excellent wear resistance.

More preferably, the uppermost surface of the hard coating layer 6 is formed of a Ti compound surface layer, the most polished area is from a mid-portion of the cutting edge 5 of the Ti compound surface layer to the flank face side cutting edge part 13 on the flank face 4 side, and the flank face side cutting edge part 13 on the flank face 4 side is smoother than the cutting edge part 12 on the rake face 3 side, in order to reduce the residual stress in the hard coating layer 6 thereby to improve the fracture resistance of the hard coating layer 6, and also smoothen the finished surface roughness of a work material, without increasing the cutting resistance in cutting.

Preferably, the Al₂O₃ layer existing in a lower layer of the Ti compound surface layer is exposed in the area where the Ti compound surface layer is most polished, in order to improve a finished surface roughness of a work piece by virtue of improvements in adhesion resistance, oxidation resistance, and plastic deformation resistance of the hard coating layer 6.

Preferably, the crystal structure of the exposed Al₂O₃ layer is α (alpha) type Al₂O₃ layer, in order to increase the stability of the Al₂O₃ layer in cutting, and maintain a stable cutting characteristic. In general, the α (alpha) type Al₂O₃ layer tends to be grained in the film depositing process, and therefore its surface roughness tends to be lowered. However, in accordance with the present invention, if formed the α (alpha) type Al₂O₃ layer, it is capable of exhibiting an excellent cutting performance as the cutting edge 5 that is formed smoothly at the above-mentioned specific surface roughness.

The crystal structure of the Al₂O₃ layer can be confirmed by an XRD (X-ray diffraction method) measurement on the surface thereof. The above-mentioned effect cannot be lost even if, in the XRD measurement, the peak of a κ (kappa) type Al₂O₃ layer may be mixed at a peak strength ratio of 1/5 or less, with respect to the main peak of the α (alpha) type Al₂O₃ layer.

It is preferable, in the interest of improvement in tip evacuating property, to perform polishing so that the arithmetic mean roughness (Ra) in a rake face mid-portion 15 continued to the rake face side cutting edge part 12 is smaller than the arithmetic mean roughness (Ra) in a flank mid-portion 16 continued to the flank face side cutting edge part 13. In a reversible tip in which both sides can sequentially serve as the rake face 3, there is also the effect of preventing any back broken when placed on a bearing surface.

It is further preferable to leave the polished Ti compound surface layer in the rake face 3 continued to the rake face side cutting edge part 12, in order to achieve a beautiful appearance exhibiting a shining yellowish color and easy visual confirmation of the used/unused state of the cutting edge.

Also in the substrate 2, it is preferable to perform a honing on the cutting edge (the crossing edge) 5 before depositing the hard coating layer 6 (hereinafter referred to simply as a "substrate honing part 18"). Preferably, the adhesion strength of the hard coating layer 6 at a polishing terminal point P_{B} of the flank face side cutting edge part 13 is higher than the adhesion strength at the mid-portion 16 of the flank face 4.

This improves the adhesion of the hard coating layer 6 in the vicinity of a termination 20 of the substrate honing part 18 which, in cutting, functions as a cutting edge ridge susceptible to the peeling of the hard coating layer 6 due to rubbing against the work material, and hence susceptible to a fine chipping. Therefore, the peeling of the hard coating layer 6 at the cutting edge 5 can be avoided thereby to significantly improve the fracture resistance and the wear resistance of the tip 1, enabling to lengthen the life of the tip 1.

As used herein, the adhesion strength in the present invention designates the adhesion strength of the hard coating layer 6, which can be measured by a so-called scratch test. Specifically, after a stylus is forced into the surface of the hard coating layer 6 and the forced load is confirmed on a load cell, the stylus is scanned transversely so as to scratch the surface of the hard coating layer 6 as a sample. Then, a load under which the hard coating layer 6 flakes off is determined as a peeling strength, by which the hard coating layer 6 peels off.

An improvement in the adhesion strength of the hard coating layer 6 can be effected by improving the vicinity of the termination 20 of the substrate honing part 18 as the cutting edge ridge. The range of the improvement may be up to 1 mm in a height H from the side end position (the rake face 3) of the tip 1. The condition of improving the adhesion strength in such a range as to exceed 1 mm in the height H is costly and requires an elongated honing time, resulting in an unpractical manufacturing.

Although in Fig. 1, the substrate honing part 18 is an R honing, it may be a chamfer honing in order to enhance the cutting performance of the cutting edge 5.
The arithmetic mean roughness (Ra) of the interface between the substrate 2 in the vicinity of the termination 20 of the substrate honing part 18, and the hard coating layer 6 is 1 µm or less, preferably 0.1 to 0.5 µm, in order to enhance the adhesion strength of the hard coating layer 6 in the vicinity of the termination 20 of the substrate honing part 18. The above-mentioned arithmetic mean roughness (Ra) of the interface is a value obtained by finding, in the light of an arithmetic mean roughness (Ra) calculating method, a difference in irregularities, except for a swell based on a basic shape of the cutting edge 5 at the interface, in a cross-sectional SEM photograph of an arbitrary portion including the interface between the substrate 2 and the hard coating layer 6.

The surface roughness of the flank mid-portion 16 is 0.5 to 2 µm, preferably 0.6 to 1.5 µm. To obtain the arithmetic mean roughness (Ra) of the surface roughness, the interface between the substrate 2 and the hard coating layer 6 is specified by observing the cross section of the tip 1 on the scanning electron microscope (SEM), and quantified from the locus of the interface by a method of measuring an arithmetic mean roughness (Ra) based on JIS B 0631-2001. In determining the surface roughness (Ra), the measurement is made under conditions of 0.25 mm in cut off value, and 0.8 mm in reference length.

As the substrate 2, any one of cemented carbide, cermet, and ceramic is usable. Among others, cemented carbide is most suitably used in the interest of adhesion strength to the hard coating layer 6, and an easy shape adjustment at the time of honing process.

The hard coating layer 6 is harder than the substrate 2, and it may be a layer selected from the group consisting of TiC, TiCN, TiN, (Ti,M)N (wherein M is at least one selected from the group consisting of Al, Si, Zr, and Cr), Al₂O₃, diamond (including PCD or DLC), and cBN, each of which is formed by CVD method (chemical vapor deposition method) or PVD method (physical vapor deposition method), or a plurality of layers of these. Among others, a hard coating layer formed by CVD method is the most effective in the interest of adhesion strength.

Description will next be made of a method of manufacturing the above-described tip 1 of the present invention. Firstly, a substantially flat substrate 2 is prepared, and a honing is performed on the area corresponding to the cutting edge 5 of the substrate 2. Examples of the honing are an R honing and a C honing (a chamfer honing).

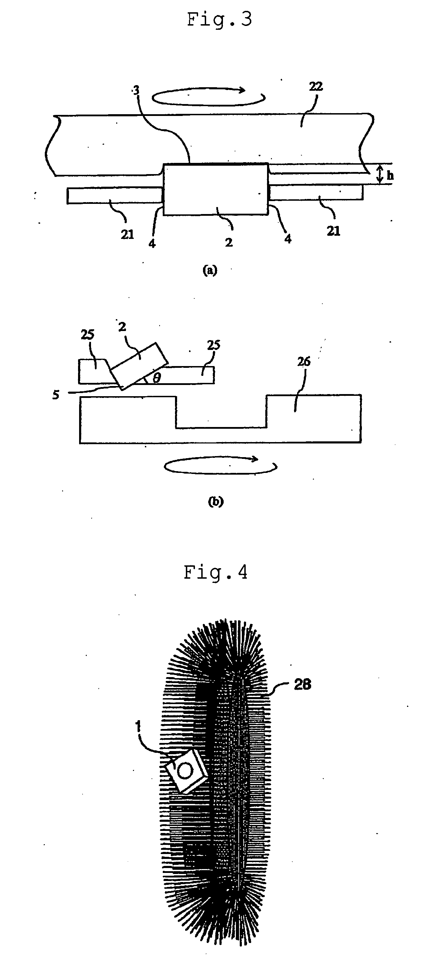

When performing the R honing, as shown in Fig. 3(a), the substrate 2 is firstly arranged so that the rake face 3 becomes a surface to be processed, and the flank face 4 side of the substrate 2 is fixed by a fixing jig 21. At this time, the amount of projection h, by which the substrate 2 is projected from the fixing jig 21, extends 1.1 mm or more from the rake face 3 to a height of about one third in the flank face 4 of the tip 1, instead of only immediately below the cutting edge 5, as has been conventional.

Subsequently, a grade G200 or higher grindstone 22, in which abrasive grains are dispersed in a rubber member, is mounted on the rake face 3 side of the tip 1. With a lapping method in which the grindstone 22 is rotated for 2 to 10 seconds while applying thereto a pressure of 200 to 400 kPa, the cutting edge 5 is polished to a R-shape and, at the same time, the area of the flank face 4 immediately below the cutting edge 5 is not substantially polished but brought into contact therewith. As the result, a region A processed in this manner is slightly polished to the degree that its shape remains unchanged but its surface state is changed. This provides an improvement in the adhesion of the hard coating layer 6. That is, a fresh surface of the substrate 2 is exposed thereby to increase the adhesion of the corresponding area of the hard coating layer 6 to be coated later. It is therefore capable of improving the adhesion strength of the hard coating layer 6 in the vicinity of the termination 20 of the substrate honing part 18, and the fracture resistance of the tip 1.

Preferably, the amount of polishing of the R honing is, for example, approximately a=0.01 to 0.2 mm on the rake face side, and b=0.005 to 0.08 on the flank face side, in order to achieve the compatibility between the wear resistance and the fracture resistance of the cutting edge 5. That is, by controlling the amount of polishing of the R honing in the above-mentioned range, the adhesion of the hard coating layer 6 can be maintained without applying too much polishing onto the cutting edge termination part.

On the other hand, when the C honing (the chamfer honing) is carried out on the cutting edge, as shown in Fig. 3(b), the substrate 2 with the hard coating layer 6 formed thereover is firstly arranged so as to make a specific angle θ (theta) by using a fixing jig 25. Then, in this state, the cutting edge 5 to be subjected to the honing is projected from the fixing jig 25 and then polished by applying it to the rotating grindstone 26. The amount of polishing of the cutting edge 5 may be controlled while observing the polishing state of the cutting edge 5 on the microscope.

Preferably, the amount of polishing by the chamfer honing is, for example, approximately a=0.05 to 0.2 mm on the rake face side, b=0.02 to 0.1 on the flank face side, and θ (theta)=15 to 30° in honing angle, in order to achieve the compatibility between the cutting performance and the prevention of chipping in the cutting edge 5.

In order to enhance the adhesion strength of the hard coating layer 6 at the termination position of the flank face side cutting edge part 13, it is desirable to include the R honing as the honing method. Especially, when performing the C honing, it is desirable to perform the R honing in advance.

On the tip subjected to the above-mentioned honing, the hard coating layer 6 is deposited by a vapor-phase reaction method such as CVD method or PVD method. Thereafter, the hard coating layer 6 in the cutting edge 5 is again polished lightly from the rake face 3 side in the same manner as the R honing, so that the uppermost layer of the hard coating layer 6 has a smaller thickness than other parts, or removed.

At this time, by using a brush that is easy to deflect such as a pig-hair brush; a mixed powder of fine diamond power having a mean particle size of 3 µm or less, preferably 0.5 to 1.5 µm, and coarse diamond powder having a mean particle size of 2 to 3 µm; and a polishing solution mixed with a lubricating oil, the present invention performs a brushing process with the rake face 3 of the tip 1 forced deeply from the surface of a brush 28 into the inside thereof, as shown in Fig. 4. Accordingly, the polishing can be performed while the brush is deflected from the end surface (the crossing ridge portion) of the rake face 3 of the tip 1 to the flank face 4. Therefore, by adjusting the resiliency of the brush and the forced pressure, the honing part 8 of the hard coating layer 6 can be polished to the above-mentioned surface state.

This method is also capable of smoothing the surface roughness of the hard coating layer 6 in the entire rake face 3, and adjusting the polishing state, enabling the rake face 3 to have a shining yellowish color.

A method of manufacturing a work piece of the present invention is to perform cutting by applying, to a work piece, the cutting edge 5 formed at the crossing ridge between the rake face 3 and frank face 4 in the cutting tool of the present invention. The work piece having an excellent surface finish can be stably achieved by carrying out the cutting process with the above-described cutting tool.

While the foregoing preferred embodiment has described the polishing process to a predetermined shape with respect to the adjacent region of the crack 9 existing in the surface of the honing part 8 in the surfaces of the honing part 8 and the rake face 3 that are surfaces to be polished, the present invention is not limited to this. A polishing process similar to that on the adjacent region of the crack 9 may be performed on the adjacent region of the crack existing in the surface of the polished rake face 3.

### [Examples]

On a surface of a CNMG-shaped tip substrate formed of cemented carbide in which WC particles having a mean particle size of 1.5 µm were bonded with Co, a R honing was carried out with a grindstone of grade No. 400 (TKX), in which abrasive grains were dispersed in a rubber member, mounted on the rake face side of the tip. With the tip 1 set at a specific angle, the cutting edge 5 to be subjected to a honing was projected, and the cutting edge 5 was applied to the rotating grindstone to perform such a chamfer honing that a=0.1 mm on the rake face side, b=0.04 mm on the flank face side, and θ (theta)=20° in honing angle. The amount of the honing was observed and confirmed on the microscope.

Subsequently, a multilayer hard coating layer of TiCN (8 µm)-Al₂O₃ (2.5 µm) -TiN (0. 5 µm) was formed on the above tip substrate by CVD method. Each tip was manufactured by polishing the hard coating layer for the cutting edge of this coating film in the manner as shown in Table 1. In Samples Nos. 1 to 5, the polishing was carried out for 120 seconds with the tip forced into a depth as shown in Table 1 by applying, to the brush, a polishing solution as a mixture of diamond abrasive grains powder having a mean particle size as shown in Table 1, and a lubricating oil. In Table 1, the term "selective polishing" in the surface state of the honing part means to polish the adjacent region of a crack so that its depth increases gradually with decreasing distance to the crack.

In each of the obtained tips, the surface roughness (the arithmetic mean roughness (Ra)) at three locations in each of the rake face side cutting edge part, the flank face side cutting edge part, the rake face mid-portion, and the flank mid-portion in the hard coating layer were measured to calculate its average value. The measurements were made on a non-contact type laser microscope, while moving the tip so that a surface to be measured was perpendicular to the laser microscope. In cases where the cutting edge shape itself had a swell, its surface roughness was calculated after subtracting the swell for linear approximation.

Further, a metallurgical microscope was used to measure a distance L_{A} from the flank to a polishing terminal position P_{A} in the cutting edge part on the rake face side when viewed from the rake face of the tip, and a distance L_{B} from the rake face to a polishing terminal position P_{B} in the cutting edge part on the flank face side when viewed from the flank, and its ratio (L_{A}/L_{B}) was calculated. It was also confirmed whether the Al₂O₃ layer was exposed to the cutting edge. The results are presented in Table 1. The microscopic examination of Samples Nos. 1 to 4 showed that the area having the smallest surface roughness (Ra) was most polished.

In addition, the cutting tests under the following conditions were conducted to determine the number of impacts causing the cutting edge to be fractured. The results are presented in Table 1.

### <Cutting Conditions>

Cutting Speed: 150 m/min
Depth of Cut: 3 mm
Feed rate: 0.5 mm/rev
Work piece: SCM440 with four grooves
Cutting fluid: Dry

**Table 1**

| Sample No. | Polishing condition | | | Surface state of a honing part | Arithmetic mean roughness (Ra) µm | Polishing distance | | | Al₂O₃ Al₂O₃ | Fracture resistance (Number of impact) | Remarks |
|---|---|---|---|---|---|---|---|---|---|---|---|
| | Diamond grain Mean particle size (µm) | Depth of forced pressure (mm) | Time (min) | | | L_{A} (mm) | L_{B} (mm) | L_{A}/L_{B} | | | |
| 1 | Mixed powder of 3 µm and 1 µm | 1.5 | 5 | Selective polishing | 0.1 | 0.04 | 0.03 | 1.2 | Expose | 1200 | |
| 2 | Mixed powder of 2 µm and 1 µm | 0.5 | 4 | Selective polishing | 0.3 | 0.06 | 0.04 | 1.5 | Expose | 1100 | |
| 3 | Mixed powder of 3 µm and 1.5 µm | 0.3 | 3 | Selective polishing | 0.2 | 0.04 | 0.04 | 1 | Expose | 1200 | |
| 4 | Mixed powder of 6 µm and 1 µm | 0.1 | 2 | Selective polishing | 0.4 | 0.06 | 0.03 | 2 | Not expose | 1000 | |
| * 5 | 1 µm Only | 0.5 | 10 | No crack | 0.04 | 0.15 | 0.03 | 5 | Expose | 800 | Adhesion |
| * 6 | 5 µm Only | 3 | 2 | No selective polishing | 0.3 | 0.16 | 0.04 | 4 | Not expose | 500 | |
| * 7 | Sandblast | | 4 | Fig.5 | 0.6 | - | | | Expose | 300 | Adhesion |

| | | | | | | | | | | | |
|---|---|---|---|---|---|---|---|---|---|---|---|
| Samples marked "*" are out of the scope of the present invention. | | | | | | | | | | | |

As shown in Table 1, depending on the polishing conditions, the surface of the honing part failed to be polished to the state that the depth in the vicinity of the crack gradually increases as shown in Figs. 6 (a) and 6(b). Sample No. 6 subjected to a uniform polishing had a low fracture resistance.

Fig. 5(a) is a scanning electron microscope (SEM) photograph showing an example of the surface of the honing part of the hard coating layer of Sample 7. Fig. 5(b) is a diagram illustrating the height of the surface of the honing part taken along the line B-B in Fig. 5(a). As shown in the figures, Sample No. 7 polished by sandblast, in which the entire area of the surface of the honing part was rough, exhibited a poor fracture resistance and a great deal of adhesion. Sample No. 5, in which the crack completely disappeared in the surface of the honing part, exhibited a great deal of adhesion.

In contrast, Samples Nos. 1 to 4, in which the surface of the honing part was polished so that the depth in the vicinity of the crack increased gradually with decreasing distance to the crack (namely the selective polishing), were excellent in fracture resistance and adhesion resistance.

## Claims

1. A cutting tool with a hard coating layer coating a surface of a substrate formed of a hard sintered body, the hard coating layer being harder than the substrate, wherein a polishing is performed on a cutting edge part ranging from a rake face side on a surface of the hard coating layer to a flank face side with a crossing ridge interposed therebetween, so that a crack is present in a polished surface, and a depth of an adjacent region of the crack increases gradually with decreasing distance to the crack.

2. The cutting tool according to claim 1, wherein the crack has a depth of 2 µm or less in the surface subjected to the polishing.

3. The cutting tool according to claim 1, wherein the crack is present intermittently in the surface subjected to the polishing.

4. The cutting tool according to claim 1, wherein the surface subjected to the polishing has an arithmetic mean roughness (Ra) of 0.05 to 0.45 µm.

5. The cutting tool according to claim 1, wherein a ratio (L_{A}/L_{B}) is 0.8 to 3, where L_{A} is a distance from the flank to a polishing terminal position P_{A} in the cutting edge part on the rake face side when viewed from the rake face, and L_{B} is a distance from the rake face to a polishing terminal position P_{B} in the cutting edge part on the flank face side when viewed from the flank.

6. The cutting tool according to claim 1, wherein the hard coating layer is formed by CVD method.

7. The cutting tool according to claim 1, wherein an Al₂O₃ layer is included as the hard coating layer, and the Al₂O₃ layer is exposed to the surface subjected to the polishing.

8. The cutting tool according to claim 7, wherein the Al₂O₃ layer has a crystal structure of α (alpha) type Al₂O₃.

9. The cutting tool according to claim 1, wherein the hard coating layer has a total layer thickness of 15 µm or less.

10. The cutting tool according to claim 1, wherein the surface subjected to the polishing contains a surface of a honing part, and the polishing is performed so that a depth of an adjacent region of a crack existing in the surface of the honing part increases gradually with decreasing distance to the crack.

11. A method of manufacturing a work piece comprising:
performing cutting by applying a cutting edge formed at a crossing ridge between the rake face and the flank in the cutting tool according to claim 1, to a work piece.
